# EUROPEAN PATENT APPLICATION

(11) **EP 4 586 703 A1**
(43) Date of publication of application: **16.07.2025**
(21) Application number: 23862759.0
(22) Date of filing: 26.06.2023
(51) Int. Cl.: H04W 52/24, H04W 72/0457, H04W 72/21, H04W 92/20

(54) **NETWORK NODE, TERMINAL DEVICE, CONTROL METHOD, AND PROGRAM WHICH IMPROVE PRECISION OF CHANNEL ESTIMATION**

(30) Priority: 05.09.2022 JP 2022141007
(71) Applicant: KDDI Research, Inc., Fujimino-shi, Saitama 356-8502 (JP)
(72) Inventor: KAMIWATARI, Shunsuke, Fujimino-shi, Saitama 356-8502 (JP); OHSEKI, Takeo, Fujimino-shi, Saitama 356-8502 (JP); KANNO, Issei, Fujimino-shi, Saitama 356-8502 (JP); AMANO, Yoshiaki, Fujimino-shi, Saitama 356-8502 (JP)
(74) Representative: Mathys & Squire
(86) International application number: PCT/JP2023/023534
(87) International publication number: WO 2024/053214

(57) **Abstract**

A network node in a wireless communication network including a terminal device that receives provision of a communication service with use of a plurality of transmission reception points, the network node which communicates with the terminal device with use of one or more of the plurality of transmission reception points, and another network node that is different from the network node and communicates with the terminal device with use of another one or more of the plurality of transmission reception points different from the one or more transmission reception points, receives, from the other network node, information related to a result of measuring, at the other one or more of the plurality of transmission reception points, a reception quality of a sounding reference signal (SRS) transmitted from the terminal device with a first transmission power determined in accordance with a power with which the SRS is to be received at the one or more of the plurality of transmission reception points, determines a second transmission power of the SRS, based on the information, and transmits, to the terminal device, a notification for causing the terminal device to transmit the SRS with the second transmission power, using at least one of the one or more of the plurality of transmission reception points.

## Description

### TECHNICAL FIELD

The present invention relates to a technology for improving channel estimation accuracy in wireless communication.

### BACKGROUND ART

Time division duplexing (TDD) is a known duplexing method used in cellular communication systems. In TDD, communication is performed by assigning different time slots in the same frequency channel to communication on an uplink (link on which signals are transmitted from a terminal device to a network node (base station device)) and a downlink (link on which signals are transmitted from the network node to the terminal device). Since TDD uses the same frequency channel for the uplink and the downlink, channel estimation values obtained on the network side based on a sounding reference signal (SRS) of the uplink can be used in communication on the downlink, for example.

### SUMMARY OF INVENTION

### TECHNICAL PROBLEM

On the downlink, signals can be transmitted from a plurality of transmission reception points provided by one or more network nodes to one terminal device. In order to efficiently perform such signal transmission on the downlink, it is important that channel estimation between each of the plurality of transmission reception points and the plurality of antennas of the terminal device is performed with high accuracy.

### SOLUTION TO PROBLEM

The present invention provides a technology for improving the accuracy of channel estimation between a transmission reception point and a terminal device.

A network node according to one aspect of the present invention is a network node in a wireless communication network including a terminal device that receives provision of a communication service with use of a plurality of transmission reception points, the network node which communicates with the terminal device with use of one or more of the plurality of transmission reception points, and another network node that is different from the network node and communicates with the terminal device with use of another one or more of the plurality of transmission reception points different from the one or more transmission reception points, the network node comprising: reception means for receiving, from the other network node, information related to a result of measuring, at the other one or more of the plurality of transmission reception points, a reception quality of a sounding reference signal (SRS) transmitted from the terminal device with a first transmission power determined in accordance with a power with which the SRS is to be received at the one or more of the plurality of transmission reception points; determination means for determining a second transmission power of the SRS, based on the information; and notification means for transmitting, to the terminal device, a notification for causing the terminal device to transmit the SRS with the second transmission power, using at least one of the one or more of the plurality of transmission reception points.

A network node according to another aspect of the present invention is a network node in a wireless communication network including the network node which communicates with a terminal device with use of one or more of a plurality of transmission reception points, and another network node that communicates with the terminal device with use of another one or more of the plurality of transmission reception points different from the one or more transmission reception points, the network node comprising: acquisition means for acquiring a result of measuring a reception quality of a sounding reference signal (SRS) at the one or more of the plurality of transmission reception points; and transmission means for transmitting, to the other network node, information related to the result of measuring, at the one or more of the plurality of transmission reception points, the reception quality of the SRS transmitted from the terminal device with a first transmission power determined in accordance with a power with which the SRS is to be received at the other one or more of the plurality of transmission reception points, the information being for use, in the other network node, when determining a second transmission power of the SRS.

A terminal device according to one aspect of the present invention is a terminal device in a wireless communication network including the terminal device which receives provision of a communication service with use of a plurality of transmission reception points, a network node that communicates with the terminal device with use of one or more of the plurality of transmission reception points, and another network node that is different from the network node and communicates with the terminal device with use of another one or more of the plurality of transmission reception points different from the one or more transmission reception points, the terminal device comprising: transmission means for transmitting a sounding reference signal (SRS) for measurement at each of the plurality of transmission reception points, with a first transmission power determined in accordance with a power with which the SRS is to be received at the one or more of the plurality of transmission reception points, and, if information indicating that the SRS is to be transmitted with a second transmission power determined in accordance with a power with which the SRS is to be received at the other one or more of the plurality of transmission reception points is received after transmission of the SRS, transmitting the SRS with the second transmission power.

### ADVANTAGEOUS EFFECTS OF INVENTION

According to the present invention, the accuracy of channel estimation between a transmission reception point and a terminal device can be improved.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example configuration of a wireless communication network.
FIG. 2 is a diagram showing an example hardware configuration of a device.
FIG. 3 is a diagram showing an example functional configuration of a network node.
FIG. 4 is a diagram showing an example functional configuration of a terminal device.
FIG. 5 is a diagram showing an example of the flow of processing that is executed in the wireless communication network.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### Network Configuration

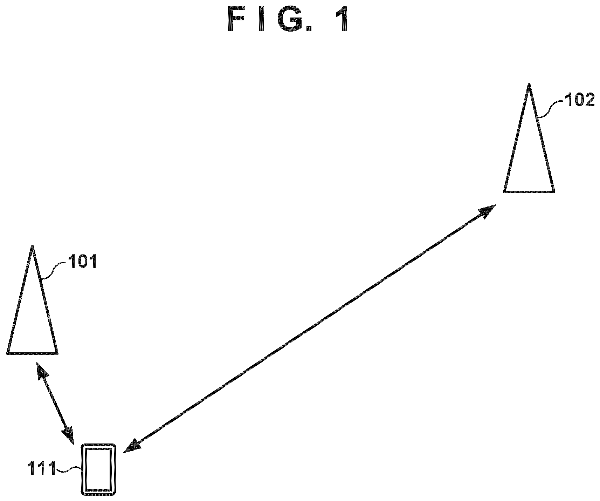

FIG. 1 shows an example configuration of a wireless communication network according to the present embodiment. The wireless communication network is constituted to include a plurality of transmission reception points (TRPs) 101 and 102 disposed in a geographically distributed manner and a terminal device 111 that communicates with a network via the plurality of transmission reception points. The transmission reception points 101 and 102 are constituted to each include one or more antennas. Also, in the present embodiment, the transmission reception points 101 and 102 can be connected to different network nodes. That is, a first network node connected to the first transmission reception point 101 and a second network node connected to the second transmission reception point 102 cooperate to provide a wireless communication service to the terminal device 111. Note that this is one example, and the transmission reception points 101 and 102 may be connected to one network node. That is, one network node can be configured to communicate with the terminal device 111 via a plurality of geographically distributed transmission reception points. Note that, hereinafter, processing that is performed between network nodes when the transmission reception points are connected to different network nodes will be described, but this processing can be read as processing within one network node having a plurality of transmission reception points subordinate thereto.

The quality of the wireless communication service in such a wireless communication system depends on the accuracy of the channel estimation values between antennas of the terminal device 111 and the antennas included in the plurality of transmission reception points 101 and 102. Here, in the present embodiment, assuming that time division duplexing (TDD) is used, channel estimation of the downlink can be performed by the radio quality of a sounding reference signal (SRS) that is transmitted from the terminal device 111 being measured at each antenna of the plurality of transmission reception points. This is because, in TDD, the same frequency channel is used for the downlink on which signals are transmitted from the transmission reception points to the terminal device 111 and the uplink on which signals are transmitted from the terminal device 111 to the transmission reception points.

The SRS is, for example, a different sequence for each antenna of the terminal device 111 and is generated using known sequences in the terminal device 111 and the transmission reception points. That is, when the terminal device 111 has four antennas, for example, an SRS is generated using a different sequence for each of the four antennas. The generated SRSs are then transmitted from the corresponding antennas at the same time and with the same frequency resources. In this way, the SRSs are multiplexed (code division multiplexed) and transmitted in a power direction using different sequences at the same time and with the same frequency resources. At a transmission reception point, the SRS can be detected using the sequences corresponding to the antennas of the terminal device 111, and channel estimation between each antenna of the terminal device 111 and the transmission reception point can be performed. Note that, in the case where the transmission reception point has a plurality of antennas, channel estimation between each of these plurality of antennas and each antenna of the terminal device 111 is performed.

Also, the terminal device 111 transmits an SRS, using a first transmission power determined such that the power with which the SRS is to be received at a transmission reception point (e.g., transmission reception point 101) subordinate to the network node that performs control-related communication is a predetermined value, for example. Note that this is merely an example, and the first transmission power may be a value determined in advance. Also, the transmission power used when performing control-related communication may be determined as the first transmission power. In one example, the first transmission power can be designated, when SRS settings information is transmitted from the network node.

In this case, when a transmission reception point (e.g., transmission reception point 102) subordinate to a network node that is not performing control-related communication is located at a position relatively far away from the terminal device 111, for example, it can be assumed that an SRS cannot be received with sufficient power at that transmission reception point. In such a situation, channel estimation cannot be performed with sufficiently high accuracy at the transmission reception point at which the SRS cannot be received with sufficient power, which can make it difficult to obtain sufficient communication performance.

In the present embodiment, in view of such circumstances, a procedure for increasing the transmission power of the SRS in the case where, for example, the result of measuring the SRS transmitted from the terminal device 111 with the above-mentioned first transmission power indicates that reception quality such as reception power is insufficient at one or more of the transmission reception points. The above-mentioned first transmission power is set such that the reception power of the SRS at a transmission reception point subordinate to the network node that is performing control-related communication with the terminal device 111 will be a predetermined value. In contrast, at a transmission reception point subordinate to another network node that is not performing control-related communication with the terminal device 111, the reception power of the SRS can be significantly lower than the predetermined value. In this case, the other network node provides information for increasing the transmission power of the SRS of the terminal device 111 to the network node that is performing control-related communication with the terminal device 111.

For example, when the reception power of the SRS is insufficient at the transmission reception point 102, the second network node having the transmission reception point 102 subordinate thereto notifies information related to the reception power of the SRS to the first network node that is performing control-related communication with the terminal device 111 and has the transmission reception point 101 subordinate thereto. The first network node then determines a second transmission power of the SRS, such that the reception power of the SRS will be sufficient at the second network, and notifies the second transmission power to the terminal device 111, via the transmission reception point 101 subordinate thereto. Thereafter, the terminal device 111 transmits the SRS using this second transmission power. This enables the terminal device 111 to transmit the SRS with transmission power based on other transmission reception points, rather than with transmission power based only on a transmission reception point subordinate to the network node that is performing control-related communication. As a result, it becomes possible for the SRS to be received with sufficient power even at transmission reception points subordinate to network nodes that are not performing control-related communication, and to sufficiently increase the channel estimation accuracy.

Note that the information related to the reception power of the SRS can be change instruction information for instructing to change the transmission power of the SRS that is generated based on the result of measuring the reception quality of the SRS at the transmission reception point 102 subordinate to the second network node. For example, the change instruction information of SRS transmission power can be information for instructing to increase the SRS transmission power by the difference between a target value of SRS transmission power and the actual reception power. Note that when the SRS reception power is improved by moving the terminal device 111, for instance, the second network node may transmit change instruction information of transmission power so as to lower the transmission power of the SRS. In these cases, the change instruction information of SRS transmission power can be configured as information that includes a value indicating the amount by which to change the transmission power. Note that the first network node can determine the second transmission power to be used in SRS transmission by the terminal device 111, by adding the value indicated by the change instruction information of SRS transmission power directly to the current first transmission power. The first network node can then notify, to the terminal device 111, a signal for instructing to transmit the SRS with the second transmit power. This is merely one example, however, and the second transmission power may be determined as a value obtained by adding a value different from the value indicated by the change instruction information of SRS transmission power to the first transmission power. For example, the first network node can determine a value obtained by adding a value smaller than the value indicated by the change instruction information of SRS transmission power to the first transmission power as the second transmission power. This makes it possible to prevent the SRS transmission power from becoming excessively large or small. Also, the change instruction information of SRS transmission power can be information for instructing to increase or decrease the SRS transmission power by a value defined in advance such as 1 dB, for example. Upon receiving this information, the first network node can transmit, to the terminal device 111, an instruction for increasing or decreasing the SRS transmission power by the value defined in advance as instructed in the received information.

Also, the first network node can notify the determined second transmission power to the second network node. This enables the second network node to recognize the extent of the transmission power with which the SRS was transmitted, and thus to accurately estimate path loss, for example. Note that, in the case where the second network node specifies general path loss using the SRS transmitted with the first transmission power, the second transmission power does not need to be notified. Also, in the case where the transmission power is changed based on change instruction information generated by the second network node, the second network node is able to specify the SRS transmission power, and thus the first network node does not need to notify the second transmission power to the second network node.

Note that a configuration may be adopted in which the first network node receives information including a value indicating the amount by which to change the transmission power from the second network node and transmits an instruction for increasing or decreasing the SRS transmission power by a value defined in advance, according to the received value. If the received value is a value that increases the transmission power, the first network node can notify information for instructing to increase the SRS transmission power by a value defined in advance to the terminal device 111. Also, if the received value is a value that decreases the transmission power, the first network node can notify information for instructing to decrease the SRS transmission power by a value defined in advance to the terminal device 111. Note that a first value defined in advance for when increasing the transmission power may be the same value as a second value defined in advance for when decreasing the transmission power or may be a different value. For example, by increasing the first value to a value greater than the second value, it becomes possible to shorten the time for sufficient transmission power to be achieved when the transmission power is insufficient, while preventing the transmission power from being greatly insufficient when the transmission power is lowered. Also, by increasing the second value to a value greater than the first value, it becomes possible to prevent the SRS from being transmitted with excessive power. Note that a plurality of different values may be defined in advance as values for increasing power, and, additionally or alternatively, a plurality of different values may be defined in advance as values for decreasing power. For example, stepwise values such as +3 dB, +1 dB, -1 dB, -3 dB may be defined for transmission power control.

Also, the information related to SRS reception power may be a value indicating the result of measuring the reception quality of the SRS at a transmission reception point subordinate to the second network node. For example, reception quality can be represented by the received signal strength indicator (RSSI), the signal-to-noise ratio (SNR), or the like. Upon receiving this information on the result of reception quality measurement, the first network node can determine the second transmission power, such that the reception quality will be greater than or equal to a value suitable for channel estimation. For example, the first network node can determine the second transmission power, such that the power with which the SRS is to be received at the transmission reception point 102 subordinate to the second network node will be a predetermined value. Note that this is merely an example, and the first network node may determine the second transmission power, such that the SRS transmission power will increase or decrease by a value defined in advance, as described above.

Also, a configuration may be adopted in which the first network node determines the second transmission power, when the difference between a value indicating the result of measuring the reception quality of the SRS at a transmission reception point subordinate to the first network node and a value indicating the result of measuring the reception quality of the SRS at a transmission reception point subordinate to the second network node exceeds a predetermined value. That is, when the second network node is able to receive an SRS with a reception quality equivalent to the SRS reception quality in the first network node, the transmission power need not be controlled unnecessarily.

Note that the first network node can, in relation to an SRS transmitted from a terminal device with which the second network node is performing control-related communication, be configured to notify information related to SRS reception power such as described above to the second network node. In this way, network nodes can have a function in the case of performing control-related communication with a terminal device and also have other functions. Also, network nodes can, when there is a transmission reception point that is unable to receive an SRS with sufficient power, among the plurality of transmission reception points that are used in communication with a terminal device, increase the SRS transmission power in the manner described above. That is, when there is a transmission reception point that is unable to receive an SRS with sufficient quality regardless of whether or not control-related communication is performed, the network nodes can notify the terminal device to increase SRS transmission power. Also, when the reception quality of an SRS at all transmission reception points is sufficient, for example, the network nodes can notify the terminal device to decrease the SRS transmission power.

Note that, in the above-described example configuration, an example in which a network node connected to a transmission reception point determines the SRS settings is described, but similar processing to the above-described processing can be performed with any suitable configuration. For example, the transmission reception points may function as the network nodes described above. In this case, the transmission reception points may cooperate with each other to determine the SRS transmission power settings to be used in the terminal device in the manner described above. Also, a higher order node than the network nodes may determine the SRS transmission power settings to be used in the terminal device. In this case, the result of measuring the reception quality of the SRS at each antenna of each transmission reception point can be aggregated in the higher-order node, and the higher-order node can determine the SRS transmission power settings to be used in the terminal device, based on the aggregated information.

By adopting the above configuration, the SRS is received with sufficient power at all transmission reception points that are used in communication with the terminal device, and the channel estimation accuracy can be improved.

### Device Configuration

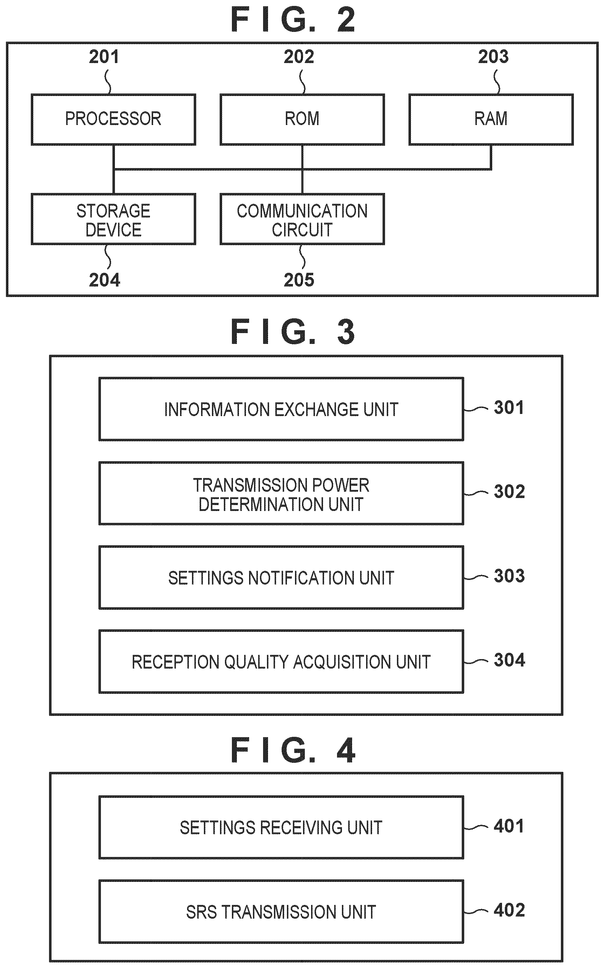

An example hardware configuration of a network node (e.g., base station device) and a terminal device will be described using FIG. 2. The network node and the terminal device are, in one example, constituted to include a processor 201, a ROM 202, a RAM 203, a storage device 204, and a communication circuit 205. The processor 201 is a computer constituted to include one or more processing circuits such as a general-purpose CPU (central processing unit) and an ASIC (application-specific integrated circuit), and executes overall processing of the device and the various processing described above, by reading out and executing programs stored in the ROM 202, the storage device 204, or the like. The ROM 202 is a read-only memory that stores information such as programs and various parameters relating to processing that is executed by the network node and the terminal device. The RAM 203 is a random access memory that functions as a workspace when the processor 201 executes programs and also stores temporary information. The storage device 204 is constituted by, for example, a removable external storage device. The communication circuit 205 is constituted by, for example, a wireless communication circuit for 5G applications, next-generation applications, and the like. Note that, in FIG. 2, one communication circuit 205 is illustrated, but the network node and the terminal device can have a plurality of communication circuits. For example, the network node and the terminal device can have a wireless communication circuit and common antenna for 5G applications, next-generation applications, and the like. Note that the network node and the terminal device may separately have an antenna for 5G applications and an antenna for next-generation applications. Also, the terminal device may have a communication circuit for other wireless communication networks such as a wireless LAN. Note that the network node and the terminal device may have a separate communication circuit 205 for each of a plurality of available frequency bands or may have a common communication circuit 205 for at least some of the frequency bands. Also, the network node can further have a wired communication circuit that is used when communicating with other network nodes or nodes of a core network. Note that a configuration may be adopted in which the network nodes have a wired communication circuit for wired communication with transmission reception points and do not have a wireless communication circuit. That is, a configuration may be adopted in which the transmission reception points are provided with a wireless communication function, and the network nodes are not involved in wireless communication processing.

FIG. 3 shows an example functional configuration of a network node. The network node has, for example, an information exchange unit 301, a transmission power determination unit 302, a settings notification unit 303, and a reception quality acquisition unit 304 as functions thereof. Note that, in FIG. 3, only functions particularly related to the present embodiment are shown, and illustration of various other functions that the network node can have is omitted. For example, the network node naturally has other functions that 5G and next-generation network nodes typically have. Also, the functional blocks of FIG. 3 are schematically shown, and the individual functional blocks may be realized in an integrated manner or may be further subdivided. Also, the functions of FIG. 3 may be realized, for example, by the processor 201 executing a program stored in the ROM 202, the storage device 204, or the like, or, for example, by a processor present inside the communication circuit 205 executing predetermined software. Note that the processing that is executed by the functional units will not be described in detail here, and the general functions will only be outlined.

The information exchange unit 301 exchanges information with other network nodes in the manner described above. The information exchange unit 301 operates so as to aggregate information on a network node connected to a transmission reception point that provides a serving cell for the terminal device. For example, the information exchange unit 301 of a network node having a transmission reception point that provides a serving cell for the terminal device subordinate thereto receives, from another network node having another transmission reception point used in communication of the terminal device subordinate thereto, information related to the result of measuring the reception quality of an SRS transmitted from the terminal device. Here, the transmission power when the terminal device transmits the SRS can be a first transmission power determined in a network node connected to a transmission reception point that provides a serving cell, such that the SRS reception quality achieves a predetermined value at that transmission reception point, for example. Also, the first transmission power may, for example, be a power obtained by increasing or decreasing the transmission power, based on an instruction from that network node. Also, the information related to the result of measuring the SRS reception quality can, for example, be change instruction information for instructing to change the SRS transmission power or information indicating the value of the reception quality, as described above. Note that the information exchange unit 301 can exchange information with other network nodes via an Xn interface or an NG interface.

The transmission power determination unit 302 determines the second transmission power to be used when the terminal device transmits the SRS, based on information related to the result of measuring the SRS reception quality acquired from another network node by the information exchange unit 301. For example, when change instruction information of SRS transmission power received by the information exchange unit 301 is received, the transmission power determination unit 302 determines the second transmission power based on the instruction thereof. Also, the transmission power determination unit 302 can determine the second transmission power, based on the reception quality of the SRS at a transmission reception point subordinate to another network node that is received by the information exchange unit 301, such that the reception quality thereof achieves a predetermined value.

The settings notification unit 303 notifies settings information to the terminal device, such that the SRS will be transmitted with the second transmission power determined by the transmission power determination unit 302. The settings notification unit 303 can transmit the settings information to the terminal device, by a radio resource control (RRC) message, for example. Also, the settings notification unit 303 may, for example, be configured to transmit the settings information by downlink control information (DCI). With such a configuration, it becomes possible for the network node to easily and quickly cause the terminal device to change the SRS transmission power, according to the communication situation. Also, the settings notification unit 303 may notify the second transmission power that is finally determined to the other network node, via the information exchange unit 301, for example.

The reception quality acquisition unit 304 acquires, from a transmission reception point connected to the network node of the reception quality acquisition unit 304, information on the reception quality measurement result of measuring the SRS transmitted from the terminal device at the transmission reception point. Note that a configuration may be adopted in which the transmission reception point only performs frequency conversion, for example, on a received radio signal and transfer the resultant radio signal to the network node. In this case, the reception quality acquisition unit 304 may perform SRS measurement, based on the radio signal transferred thereto, and acquire the result of the SRS reception quality measurement. Note that the SRS reception quality can be acquired as the magnitude of the channel estimation value (absolute value of channel estimation value) at each transmission reception point or as the squared value of the channel estimation value. Also, the SRS reception quality may also be represented by another metric such as the signal-to-noise ratio, for example. The network node can provide information related to the SRS reception quality measurement result to another network node with the information exchange unit 301.

FIG. 4 shows an example functional configuration of a terminal device. The terminal device has, for example, a settings receiving unit 401 and an SRS transmission unit 402 as functions thereof. Note that, in FIG. 4, only functions particularly related to the present embodiment are shown, and illustration of various other functions that the terminal device can have is omitted. For example, the terminal device naturally has other functions that 5G and next-generation terminal devices typically have. Also, the functional blocks of FIG. 4 are schematically shown, and the individual functional blocks may be realized in an integrated manner or may be further subdivided. Also, the functions of FIG. 4 may be realized, for example, by the processor 201 executing a program stored in the ROM 202, the storage device 204, or the like, or, for example, by a processor present inside the communication circuit 205 executing predetermined software. Note that the processing that is executed by the functional units will not be described in detail here, and the general functions will only be outlined.

The settings receiving unit 401 receives the SRS transmission power settings from a network node that provides a serving cell. These SRS transmission power settings can be received, by a radio resource control (RRC) message, for example. Also, for example, the settings receiving unit 401 may be configured to receive information indicating the SRS transmission power settings, by downlink control information (DCI). The SRS transmission unit 402 sets the transmission power based on transmission power settings information received by the settings receiving unit 401 and transmits the SRS.

### Processing Flow

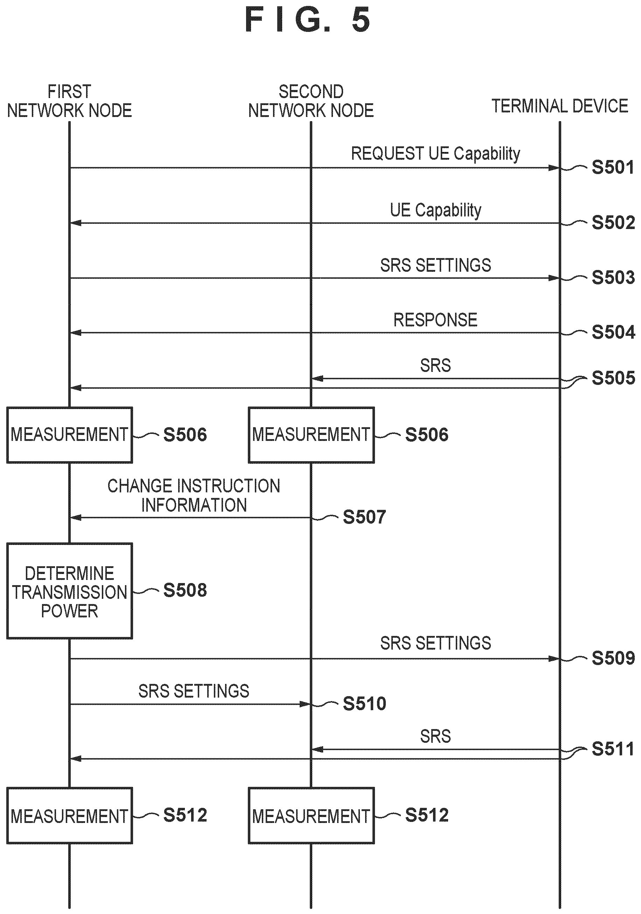

Next, an example of the flow of processing executed in the wireless communication network will be described using FIG. 5. Note that since the details of the processing steps described here are as described above, the processing flow will only be summarized here.

First, settings including designating the SRS transmission power are configured between the first network node having a transmission reception point that provides a serving cell subordinate thereto and a terminal device, in a similar manner to conventional processing. First, the first network node requests the terminal device to transmit capability information (UE capability) (step S501). The terminal device transmits the UE capability to the first network node, in response to this request (step S502). The UE capability referred to here includes, for example, information such as the maximum value of transmission power available to the terminal device 111. The first network node determines settings information including the initial SRS transmission power settings, based on the received UE capability, and notifies the settings information to the terminal device (step S503). The SRS transmission power referred to here can, for example, be a first transmission power determined such that the reception quality (e.g., reception power) of the SRS at the transmission reception point subordinate to the first network node achieves a predetermined value. The settings information including settings relating to the SRS transmission power can be notified to the terminal device from the first network node, using RRC signaling, for example. Upon receiving these SRS settings, the terminal device notifies a response message for indicating that the settings information was successfully received to the first network node (step S504). Initial SRS setting is thereby completed.

The terminal device 111 generates an SRS and transmits the SRS from each of the one or more antennas with the first transmission power notified in step S503 (step S505). The first network node and the second network node measure the SRS transmitted from each antenna of the terminal device 111, at antennas of the transmission reception points respectively connected to the first network node and the second network node (step S506). The first network node and the second network node perform channel estimation based on this SRS and measure the reception quality of the SRS. Note that the SRS reception quality measurement result may be acquired by appropriating the channel estimation result, such as the absolute value of the channel estimation value.

Here, it is assumed that the result of measuring the reception quality of the SRS in the second network node was insufficient for high-accuracy channel estimation. In this case, in one example, the second network node notifies change instruction information for notifying the first network node providing the serving cell that the settings should be changed (step S507). This notification can, for example, be performed using an Xn interface or an NG interface. Note that the second network node may notify the SRS reception quality measurement result to the first network node. Also, rather than notifying that the settings should be changed, the second network node may notify the first network node that, for example, a predetermined improvement in reception quality is required. The first network node determines whether the SRS transmission power should be changed, based on the information notified from the second network node. Here, it is assumed that the first network node has determined that the SRS is to be transmitted with a second transmission power obtained by increasing the transmission power (step S508). The first network node then notifies, to the terminal device, settings information for enabling the SRS to be transmitted with the determined second transmission power (step S509). The notification of SRS settings information referred to here may be performed using an RRC message or using a message in another format such as DCI. Note that the first network node may also notify the determined second transmission power to the second network node (step S510). This notification can, for example, be performed using an Xn interface or an NG interface.

Thereafter, the terminal device transmits the SRS with the second transmission power, based on the notified settings information (step S511), and the first network node and the second network node use this SRS to perform channel estimation and reception quality measurement (step S512). As a result of using such SRS transmission power settings, the reception quality of the SRS at a transmission reception point subordinate to the second network node is improved. The accuracy of channel estimation between each antenna of the terminal device and the antennas of the transmission reception points can thereby be improved.

As described above, in the present embodiment, by controlling the transmission power of the SRS, the reception quality of the SRS at transmission reception points of the network can be improved, and the channel estimation accuracy can be improved. Therefore, it is possible to contribute to Goal 9 of the United Nations' Sustainable Development Goals (SDGs), "Build resilient infrastructure, promote sustainable industrialization, and foster innovation".

The invention is not limited to the foregoing embodiments, and various variations/changes are possible within the spirit of the invention.

The present application claims priority to Japanese Patent Application No. 2022-141007 filed on September 5, 2022, and the entire content thereof is incorporated herein by reference.

## Claims

1. A network node in a wireless communication network including a terminal device that receives provision of a communication service with use of a plurality of transmission reception points, the network node which communicates with the terminal device with use of one or more of the plurality of transmission reception points, and another network node that is different from the network node and communicates with the terminal device with use of another one or more of the plurality of transmission reception points different from the one or more transmission reception points, the network node comprising:
reception means for receiving, from the other network node, information related to a result of measuring, at the other one or more of the plurality of transmission reception points, a reception quality of a sounding reference signal (SRS) transmitted from the terminal device with a first transmission power determined in accordance with a power with which the SRS is to be received at the one or more of the plurality of transmission reception points;
determination means for determining a second transmission power of the SRS, based on the information; and
notification means for transmitting, to the terminal device, a notification for causing the terminal device to transmit the SRS with the second transmission power, using at least one of the one or more of the plurality of transmission reception points.

2. The network node according to claim 1,
wherein the information is change instruction information for instructing to change the transmission power of the SRS from the other network node that is based on the result of measuring the reception quality of the SRS at the other one or more of the plurality of transmission reception points, and
the determination means determines, when the information is received, the second transmission power in accordance with the change instruction information.

3. The network node according to claim 2,
wherein the determination means determines, when the change instruction information is received, the second transmission power, such that the second transmission power is higher than the first transmission power.

4. The network node according to claim 1,
wherein the information is information indicating the result of measuring the reception quality of the SRS at the other one or more of the plurality of transmission reception points, and
the determination means determines the second transmission power, based on the information of the measurement result, such that a power with which the SRS is to be received at the other one or more of the plurality of transmission reception points will be a predetermined value.

5. The network node according to claim 1,
wherein the notification means further notifies the second transmission power to the other network node.

6. The network node according to claim 1, further comprising:
acquisition means for acquiring a result of measuring a reception quality of the SRS at the one or more of the plurality of transmission reception points; and
transmission means for transmitting information related to the result of measuring the reception quality of the SRS at the one or more of the plurality of transmission reception points to the other network node.

7. A network node in a wireless communication network including the network node which communicates with a terminal device with use of one or more of a plurality of transmission reception points, and another network node that communicates with the terminal device with use of another one or more of the plurality of transmission reception points different from the one or more transmission reception points, the network node comprising:
acquisition means for acquiring a result of measuring a reception quality of a sounding reference signal (SRS) at the one or more of the plurality of transmission reception points; and
transmission means for transmitting, to the other network node, information related to the result of measuring, at the one or more of the plurality of transmission reception points, the reception quality of the SRS transmitted from the terminal device with a first transmission power determined in accordance with a power with which the SRS is to be received at the other one or more of the plurality of transmission reception points, the information being for use, in the other network node, when determining a second transmission power of the SRS.

8. A terminal device in a wireless communication network including the terminal device which receives provision of a communication service with use of a plurality of transmission reception points, a network node that communicates with the terminal device with use of one or more of the plurality of transmission reception points, and another network node that is different from the network node and communicates with the terminal device with use of another one or more of the plurality of transmission reception points different from the one or more transmission reception points, the terminal device comprising:
transmission means for transmitting a sounding reference signal (SRS) for measurement at each of the plurality of transmission reception points, with a first transmission power determined in accordance with a power with which the SRS is to be received at the one or more of the plurality of transmission reception points, and, if information indicating that the SRS is to be transmitted with a second transmission power determined in accordance with a power with which the SRS is to be received at the other one or more of the plurality of transmission reception points is received after transmission of the SRS, transmitting the SRS with the second transmission power.

9. A control method to be executed by a network node in a wireless communication network including a terminal device that receives provision of a communication service with use of a plurality of transmission reception points, the network node which communicates with the terminal device with use of one or more of the plurality of transmission reception points, and another network node that is different from the network node and communicates with the terminal device with use of another one or more of the plurality of transmission reception points different from the one or more transmission reception points, the control method comprising:
receiving, from the other network node, information related to a result of measuring, at the other one or more of the plurality of transmission reception points, a reception quality of a sounding reference signal (SRS) transmitted from the terminal device with a first transmission power determined in accordance with a power with which the SRS is to be received at the one or more of the plurality of transmission reception points;
determining a second transmission power of the SRS, based on the information; and
transmitting, to the terminal device, a notification for causing the terminal device to transmit the SRS with the second transmission power, using at least one of the one or more of the plurality of transmission reception points.

10. A control method to be executed by a network node in a wireless communication network including the network node which communicates with a terminal device with use of one or more of a plurality of transmission reception points, and another network node that communicates with the terminal device with use of another one or more of the plurality of transmission reception points different from the one or more transmission reception points, the control method comprising:
acquiring a result of measuring a reception quality of a sounding reference signal (SRS) at the one or more of the plurality of transmission reception points; and
transmitting, to the other network node, information related to the result of measuring, at the one or more of the plurality of transmission reception points, the reception quality of the SRS transmitted from the terminal device with a first transmission power determined in accordance with a power with which the SRS is to be received at the other one or more of the plurality of transmission reception points, the information being for use, in the other network node, when determining a second transmission power of the SRS.

11. A control method to be executed by a terminal device in a wireless communication network including the terminal device which receives provision of a communication service with use of a plurality of transmission reception points, a network node that communicates with the terminal device with use of one or more of the plurality of transmission reception points, and another network node that is different from the network node and communicates with the terminal device with use of another one or more of the plurality of transmission reception points different from the one or more transmission reception points, the control method comprising:
transmitting a sounding reference signal (SRS) for measurement at each of the plurality of transmission reception points, with a first transmission power determined in accordance with a power with which the SRS is to be received at the one or more of the plurality of transmission reception points; and
if information indicating that the SRS is to be transmitted with a second transmission power determined in accordance with a power with which the SRS is to be received at the other one or more of the plurality of transmission reception points is received after transmission of the SRS, transmitting the SRS with the second transmission power.

12. A computer program for causing a computer provided in a network node in a wireless communication network including a terminal device that receives provision of a communication service with use of a plurality of transmission reception points, the network node which communicates with the terminal device with use of one or more of the plurality of transmission reception points, and another network node that is different from the network node and communicates with the terminal device with use of another one or more of the plurality of transmission reception points different from the one or more transmission reception points to:
receive, from the other network node, information related to a result of measuring, at the other one or more of the plurality of transmission reception points, a reception quality of a sounding reference signal (SRS) transmitted from the terminal device with a first transmission power determined in accordance with a power with which the SRS is to be received at the one or more of the plurality of transmission reception points;
determine a second transmission power of the SRS, based on the information; and
transmit, to the terminal device, a notification for causing the terminal device to transmit the SRS with the second transmission power, using at least one of the one or more of the plurality of transmission reception points.

13. A computer program for causing a computer provided in a network node in a wireless communication network including the network node which communicates with a terminal device with use of one or more of a plurality of transmission reception points, and another network node that communicates with the terminal device with use of another one or more of the plurality of transmission reception points different from the one or more transmission reception points to:
acquire a result of measuring a reception quality of a sounding reference signal (SRS) at the one or more of the plurality of transmission reception points; and
transmit, to the other network node, information related to the result of measuring, at the one or more of the plurality of transmission reception points, the reception quality of the SRS transmitted from the terminal device with a first transmission power determined in accordance with a power with which the SRS is to be received at the other one or more of the plurality of transmission reception points, the information being for use, in the other network node, when determining a second transmission power of the SRS.

14. A computer program for causing a computer provided in a terminal device in a wireless communication network including the terminal device which receives provision of a communication service with use of a plurality of transmission reception points, a network node that communicates with the terminal device with use of one or more of the plurality of transmission reception points, and another network node that is different from the network node and communicates with the terminal device with use of another one or more of the plurality of transmission reception points different from the one or more transmission reception points to:
transmit a sounding reference signal (SRS) for measurement at each of the plurality of transmission reception points, with a first transmission power determined in accordance with a power with which the SRS is to be received at the one or more of the plurality of transmission reception points; and
if information indicating that the SRS is to be transmitted with a second transmission power determined in accordance with a power with which the SRS is to be received at the other one or more of the plurality of transmission reception points is received after transmission of the SRS, transmit the SRS with the second transmission power.
